# EUROPEAN PATENT APPLICATION

(11) **EP 2 685 743 A1**
(43) Date of publication of application: **15.01.2014**
(21) Application number: 12755511.8
(22) Date of filing: 09.03.2012
(51) Int. Cl.: H04Q 3/42, H04Q 3/545, H04W 24/04, H04W 52/02

(54) **NETWORK DEVICE**

(30) Priority: 09.03.2011 JP 2011051923
(71) Applicant: NTT DOCOMO, INC., Chiyoda-ku Tokyo 100-6150 (JP)
(72) Inventor: TOOYAMA, Hiroto, Tokyo 100-6150 (JP); UMEDA, Narumi, Tokyo 100-6150 (JP); MORIHIRO, Yoshifumi, Tokyo 100-6150 (JP); HIRAKI, Masato, Tokyo 100-6150 (JP)
(74) Representative: HOFFMANN EITLE
(86) International application number: PCT/JP2012/056089
(87) International publication number: WO 2012/121364

(57) **Abstract**

Provided is a network device capable of achieving low power consumption of a call control card and suppressing a failure of the call control card. A network device 20 includes a selection unit 23 that selects a call control card, for which a power supply is to be disconnected, from a plurality of call control cards, and a power saving control unit 24 that disconnects the power supply of the call control card selected by the selection unit 23. The power saving control unit 24 reduces a margin set in a call control cards not selected by the selection unit 23 in response to the disconnection of the power supply of the call control card selected by the selection unit 23 to thereby increase the number of operational connection calls set in the call control card not selected by the selection unit 23.

## Description

### [Technical Field]

The present invention relates to a network device including a plurality of call control cards.

### [Background Art]

In the conventional art, there has been known a mobile communication system including a network device that performs call control. The network device, for example, is a radio control device (RNC) provided in a first communication system (first RAT (Radio Access Technology)) such as 3G. Alternatively, the network device, for example, is a radio base station (for example, MME or eNodeB) provided in a second communication system (second RAT) such as LTE.

Furthermore, the network device includes a plurality of call control cards that perform call control. Each of the plurality of call control cards controls calls that are set up with a plurality of mobile communication terminals. For example, the call control card includes a card for instructing a mobile communication terminal to perform a call process, a card for terminating a connection signal of a call that is set up with the mobile communication terminal, and the like (for example, Patent Literature 1).

However, in general, the number of operational connection calls, which are obtained by subtracting a constant margin from the maximum number of connection calls settable by the call control card, is set in the call control card. In this way, it is possible to absorb a temporary increase in the number of calls.

### [Citation List]

### [Patent Literature]

[PTL 1] Japanese Unexamined Patent Application Publication No. 2002-27109

### [Summary of Invention]

However, in recent years, power saving is demanded in an entire mobile communication system from the consideration of an environment and the like. For example, in the aforementioned technology, cooling capability of a cooling fan for cooling the call control card is controlled according to heat load levels of the call control card, resulting in the achievement of low power consumption of the cooling fan.

However, in the aforementioned technology, it is not possible to sufficiently achieve the low power consumption of the call control card.

Therefore, the present invention has been achieved in view of the above-described problems, and an object thereof is to provide a network device with which it is possible to achieve the low power consumption thereof. Furthermore, an object of the present invention is to shorten a continuous operating time of a call control card by disconnecting the power supply of the call control card to thereby suppress a failure of the call control card.

A network device according to a first characteristic includes a plurality of call control cards. The network device includes a selection unit that selects a call control card, for which a power supply is to be disconnected, from the plurality of call control cards, a power saving control unit that disconnects the power supply of the call control card selected by the selection unit, and an assignment unit (an assignment unit 25) that controls a number of connection calls set by each of the plurality of call control cards such that the number of connection calls does not exceed a number of operational connection calls obtained by subtracting a margin from a maximum number of connection calls settable by each of the plurality of call control cards. The power saving control unit reduces a margin set in a call control card not selected by the selection unit in response to disconnection of the power supply of the call control card selected by the selection unit to thereby increase a number of operational connection calls set in the call control card not selected by the selection unit.

In the first characteristic, in order to offset a number of operational connection calls set in the call control card selected by the selection unit, the power saving control unit reduces a margin set in the call control card not selected by the selection unit, thereby increase the number of operational connection calls set in the call control card not selected by the selection unit.

In the first characteristic, the power saving control unit disconnects the power supply of the call control card selected by the selection unit, in a predetermined cycle.

In the first characteristic, the power saving control unit disconnects the power supply of the call control card selected by the selection unit, when a number of connection calls, which is controlled by all the plurality of call control cards becomes lower than a predetermined threshold value.

In the first characteristic, the selection unit selects the call control card, for which the power supply is to be disconnected, based on at least one information of a total number of disconnections of a power supply, a total disconnection time of a power supply, a total number of processes of a connection call, and a total number of accesses to a hardware resource.

In the first characteristic, before disconnection of the power supply, the power saving control unit allows the call control card selected by the selection unit to be transitioned in a disconnection preparation state in which assignment of a new call is limited.

In the first characteristic, the network device further includes a data shift unit (a data shift unit 27) that shifts user data, which is stored in the call control card transitioned in the disconnection preparation state, to a call control card not transitioned in the disconnection preparation state.

### [Brief Description of Drawings]

[Fig. 1] Fig. 1 is a diagram illustrating a mobile communication system 100 according to a first embodiment.
[Fig. 2] Fig. 2 is a diagram illustrating a network device 20 according to the first embodiment.
[Fig. 3] Fig. 3 is a diagram illustrating a communication card group 21 according to the first embodiment.
[Fig. 4] Fig. 4 is a diagram illustrating (initial) setting values of a call control card according to the first embodiment.
[Fig. 5] Fig. 5 is a diagram illustrating (changed) setting values of the call control card according to the first embodiment.

### [Description of Embodiments]

Hereinafter, a mobile communication system according to an embodiment of the present invention will be described with reference to the accompanying drawings. Note that in the descriptions of the drawing below, identical or similar symbols are assigned to identical or similar portions.

It will be appreciated that the drawings are schematically shown and the ratio and the like of each dimension are different from the real ones. Accordingly, specific dimensions should be determined in consideration of the explanation below. Of course, among the drawings, the dimensional relationship and the ratio may be different.

### [Overview of Embodiment]

A network device according to the embodiment includes a plurality of call control cards. The network device includes a selection unit that selects call control cards, for which power supplies are to be disconnected, from the plurality of call control cards, and a power saving control unit that disconnects the power supplies of the call control cards selected by the selection unit. The number of connection calls set by each of the plurality of call control cards is controlled not to exceed the number of operational connection calls obtained by subtracting a margin from the maximum number of connection calls settable by each of the plurality of call control cards. The power saving control unit reduces a margin set in call control cards not selected by the selection unit in response to the disconnection of the power supplies of the call control cards selected by the selection unit to thereby increase the number of operational connection calls set in the call control cards not selected by the selection unit.

In the embodiment, the power saving control unit reduces the margin set in the call control cards not selected by the selection unit in response to the disconnection of the power supplies of the call control cards selected by the selection unit to thereby increase the number of operational connection calls set in the call control cards not selected by the selection unit. Consequently, it is possible to disconnect power supplies of call control cards selected from the plurality of call control cards while absorbing a temporary increase in the number of calls.

As described above, the power supplies of the call control cards are disconnected, so that it is possible to achieve the lower power consumption of the network device. Furthermore, the power supplies of the call control cards are disconnected, so that it is possible to shorten continuous operating times of the call control cards and to suppress a failure of the call control cards.

### [First Embodiment]

### (Configuration of mobile communication system)

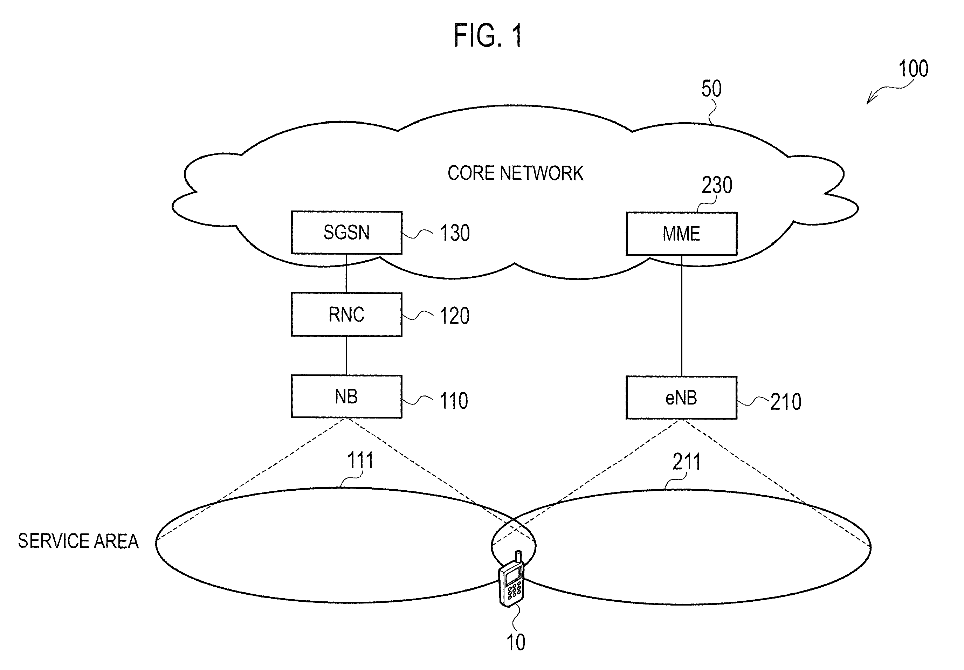

Hereinafter, the configuration of a mobile communication system according to a first embodiment will be described with reference to the accompanying drawings. Fig. 1 is a diagram illustrating a mobile communication system 100 according to the first embodiment.

As illustrated in Fig. 1, the mobile communication system 100 includes a communication terminal device 10 (hereinafter, referred to as UE 10) and a core network 50. Furthermore, the mobile communication system 100 includes a first communication system and a second communication system.

The first communication system, for example, is a communication system corresponding to UMTS (Universal Mobile Telecommunication System). The first communication system includes a base station 110 (hereinafter, referred to as NB 110), RNC 120, and SGSN 130. In addition, in the first communication system, first RAT (Radio Access Technology) is used.

The second communication system, for example, is a communication system corresponding to LTE (Long Term Evolution). The second communication system, for example, includes a base station 210 (hereinafter, referred to as eNB 210) and MME 230. In addition, in the second communication system, second RAT (Radio Access Technology) is used.

The UE 10 is a device (User Equipment) configured to communicate with the first communication system and the second communication system. For example, the UE 10 has a function of performing radio communication with the NB 110, and a function of performing radio communication with the eNB 210.

The NB 110, having a cell 111, is a device (NodeB) configured to perform radio communication with the UE 10 existing in the cell 111.

The RNC 120, connected to the NB 110, is a device (Radio Network Controller) configured to set up a radio connection (RRC Connection) with the UE 10 existing in the cell 111.

The SGSN 130 is a device (Serving GPRS Support Node) configured to perform packet switching in a packet switching domain. The SGSN 130 is provided in the core network 50. Although not illustrated in Fig. 1, a device (MSC; Mobile Switching Center) configured to perform circuit switching in a circuit switching domain may be provided in the core network 50.

The eNB 210, having a cell 211, is a device (evolved NodeB) configured to perform radio communication with the UE 10 existing in the cell 211.

The MME 230 is a device (Mobility Management Entity) configured to manage the mobility of the UE 10 having set up a radio connection with the eNB 210. The MME 230 is provided in the core network 50.

Furthermore, a cell must be understood as a function of performing radio communication with the UE 10. The cell may also be considered as a service area indicating a range communicable with the cell. A cell is identified based on the frequency used in the cell, the spreading code, or the time slot.

### (Configuration of network device)

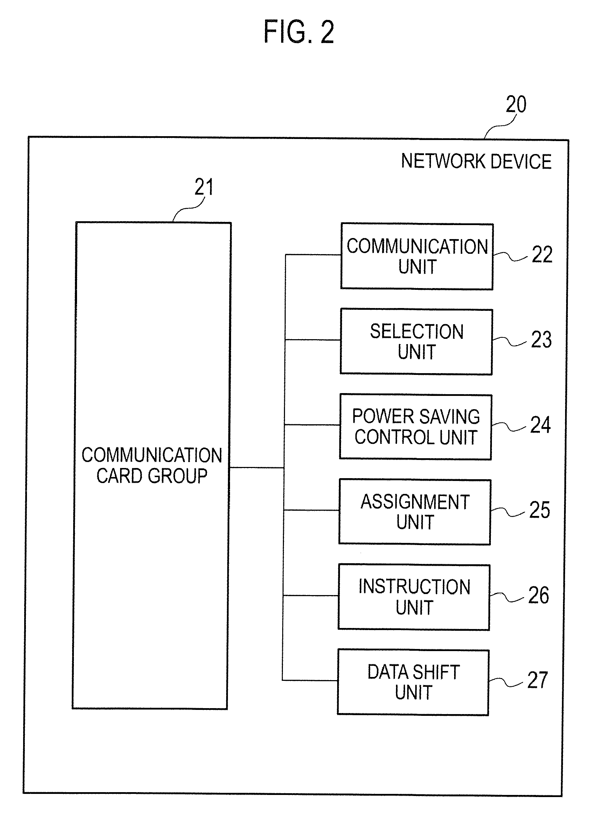

Hereinafter, a configuration of the network device according to the first embodiment will be described with reference to the accompanying drawings. Fig. 2 is a diagram illustrating a network device 20 according to the first embodiment.

The network device 20, for example, may be the RNC 120 provided in the first communication system. Alternatively, the network device 20, for example, may be the eNB 210 provided in the second communication system. Alternatively, the network device 20, for example, may be the MME 230 provided in the second communication system.

As illustrated in Fig. 2, the network device 20 includes a communication card group 21, a communication unit 22, a selection unit 23, a power saving control unit 24, an assignment unit 25, an instruction unit 26, and a data shift unit 27.

The communication card group 21 includes a plurality of call control cards such as a card for instructing a mobile communication terminal to perform a call process, or a card for terminating a connection signal of a call that is set up with the mobile communication terminal. Furthermore, the communication card group 21 may include a card for communicating with another network device, a card for controlling HSDPA (High Speed Downlink Packet Access), HSUPA (High Speed Uplink Packet Access), or the like.

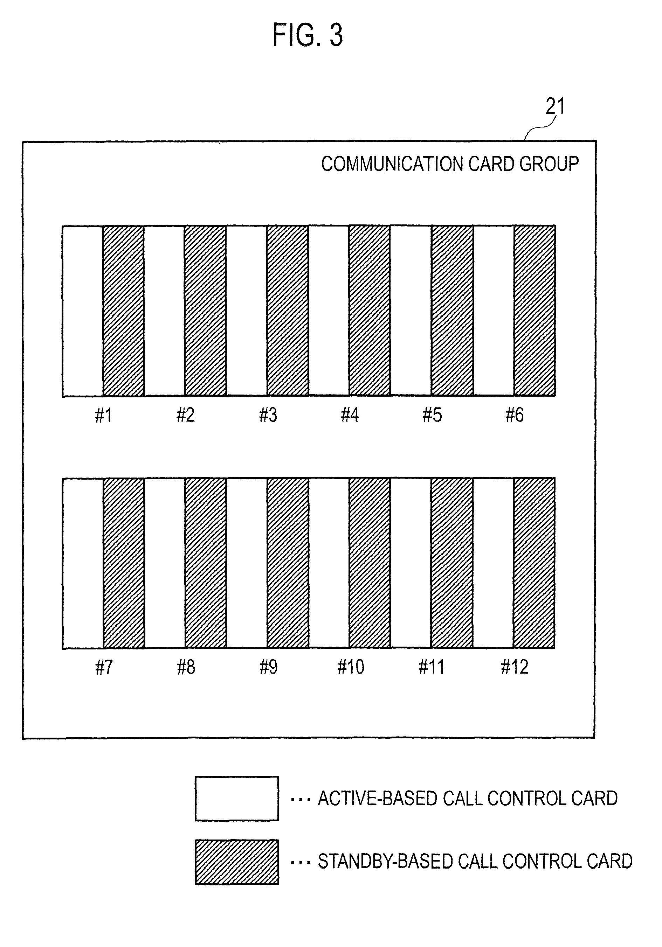

In the first embodiment, the communication card group 21 includes a plurality of card sets (for example, a card set #1 to a card set #12) as illustrated in Fig. 3. Each card set includes a pair of call control cards. Between the pair of call control cards, one call control card serves as an active-based call control card, and the other call control card serves as a standby-based call control card.

The active-based call control card is an actually operating call control card. Meanwhile, the standby-based call control card is a call control card that is used as a substitute of the active-based call control card.

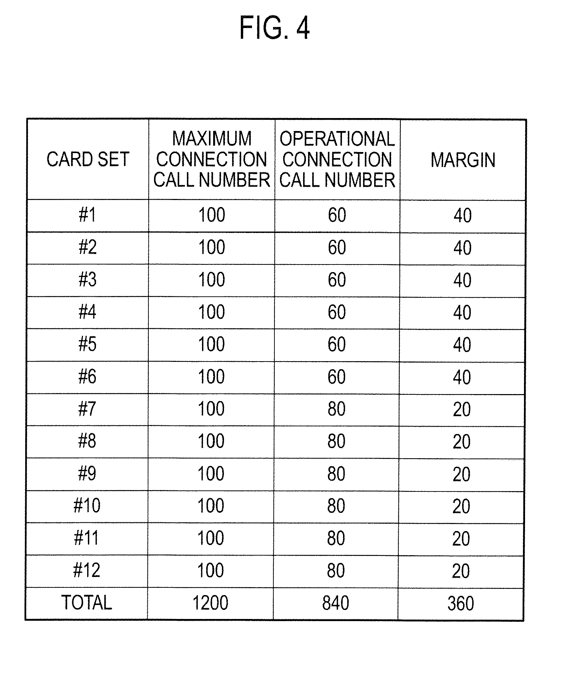

Furthermore, as illustrated in Fig. 4, in the call control card, the maximum number of connection calls, the number of operational connection calls, and a margin are set. In addition, Fig. 4 illustrates the maximum number of connection calls, the number of operational connection calls, and the margin that are set in the active-based call control cards of each card set. Furthermore, the maximum number of connection calls, the number of operational connection calls, and the margin are expressed by indexes.

The maximum number of connection calls is a maximum value of the number of connection calls settable by the call control card. The margin is an allowance for absorbing an increase in the number of connection calls. The number of operational connection calls is a value obtained by subtracting a margin from the maximum number of connection calls.

Furthermore, as illustrated in Fig. 4, in the active-based call control cards of the card set #1 to the card set #6, "60" is set as the number of operational connection calls. Meanwhile, in the active-based call control cards of the card set #7 to the card set #12, "80" is set as the number of operational connection calls.

Furthermore, the number of connection calls set by the call control card is controlled not to exceed the number of operational connection calls. It is also considered that the number of connection calls set by the call control card temporarily exceeds the number of operational connection calls.

In addition, the maximum number of connection calls (absolute values) of the active-based call control cards of each card set may be different from each other. Furthermore, the margins and the number of operational connection calls set in the active-based call control cards of each card set may be different from each other.

Returning to Fig. 1, the communication unit 22 communicates with the UE 10. Furthermore, the communication unit 22 communicates with another network device.

The selection unit 23 selects active-based call control cards, for which power supplies are to be disconnected, from the plurality of call control cards (here, the active-based call control cards) included in the communication card group 21.

Specifically, the selection unit 23 selects the active-based call control cards, for which power supplies are to be disconnected, based on at least one information (hereinafter, referred to as determination reference information) of "the total number of disconnections of a power supply", "the total disconnection time of a power supply", "the total number of processes of a connection call", and "the total number of accesses to a hardware resource". For example, the selection unit 23 selects the active-based call control cards, for which the power supplies are to be disconnected, such that the degree of exhaustion of the active-based call control cards is uniformized for all the active-based call control cards.

The "total number of disconnections of a power supply" is the sum of the number of times by which the power supplies of the active-based call control cards are disconnected in a constant interval. The "total disconnection time of a power supply" is the sum of times for which the power supplies of the active-based call control cards are disconnected in a constant interval. The "total number of processes of a connection call" is the sum of the number of connection calls processed by the active-based call control cards in a constant interval. The "total number of accesses to a hardware resource" is the sum of the number of times by which the active-based call control cards access the hardware resource of the network device 20 in a constant interval.

The power saving control unit 24 controls a mode (hereinafter, referred to as a power saving mode) of saving power supplied to the plurality of call control cards (here, the active-based call control cards) included in the communication card group 21.

Specifically, the power saving control unit 24 reduces a margin set in active-based call control cards not selected by the selection unit 23 in response to the disconnection of the power supplies of the active-based call control cards selected by the selection unit 23. That is, the power saving control unit 24 increases the number of operational connection calls set in the active-based call control cards not selected by the selection unit 23.

Specifically, in order to offset the number of operational connection calls set in the active-based call control cards selected by the selection unit 23, the power saving control unit 24 reduces the margin set in the active-based call control cards not selected by the selection unit 23. That is, in order to offset the number of operational connection calls set in the active-based call control cards selected by the selection unit 23, the power saving control unit 24 increases the number of operational connection calls set in the active-based call control cards not selected by the selection unit 23.

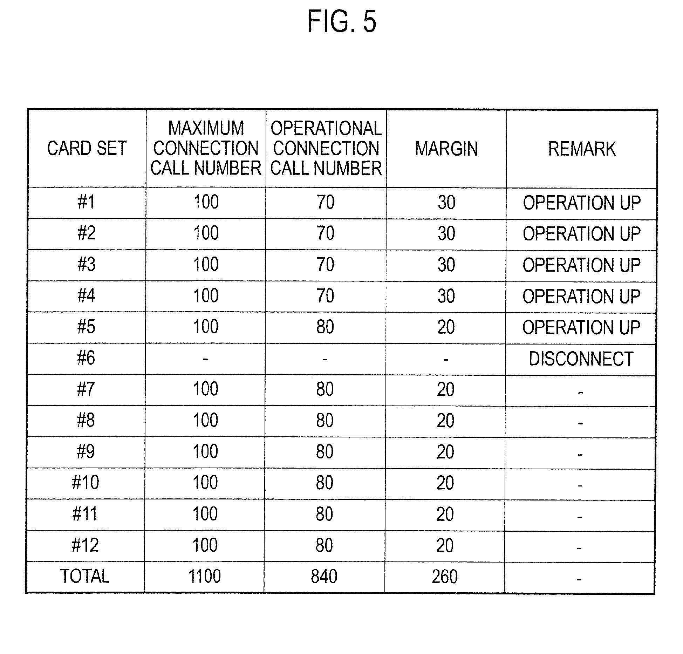

For example, with reference to Fig. 5, a description will be provided for the case in which when the maximum number of connection calls, the number of operational connection calls, and the margin illustrated in Fig. 4 are set in the active-based call control cards, the active-based call control cards of the card set #6 are selected as active-based call control cards for which power supplies are to be disconnected.

As illustrated in Fig. 5, the margin set in the active-based call control cards of the card set #1 to the card set #4 is changed from "40" to "30". Furthermore, the margin set in the active-based call control cards of the card set #5 is changed from "40" to "20". In other words, the number of operational connection calls set in the active-based call control cards of the card set #1 to the card set #4 is changed from "60" to "70". Furthermore, the number of operational connection calls set in the active-based call control cards of the card set #5 is changed from "60" to "80".

As described above, since the number of operational connection calls set in the active-based call control cards for which power supplies are to be disconnected is offset, the sum "840" of the number of operational connection calls is maintained.

In addition, it is preferable that the power saving control unit 24 disconnects the power supplies of standby-based call control cards, which are used as substitutes of active-based call control cards, together with the power supplies of the active-based call control cards. In other words, in the case of disconnecting the power supplies of active-based call control cards included in one card set, it is preferable that the power saving control unit 24 also disconnects the power supplies of standby-based call control cards included in the one card set.

In the first embodiment, the power saving control unit 24 may also disconnect the power supplies of the call control cards (here, the active-based call control cards), which are selected by the selection unit 23, in a predetermined cycle (for example, a cycle of one day). For example, it is preferable that the power saving control unit 24 disconnects the power supplies of the active-based call control cards, which are selected by the selection unit 23, in a time zone (night and the like) in which a traffic amount is small.

Alternatively, when the number of connection calls, which is controlled by all the plurality of call control cards (here, the active-based call control cards), which are included in the communication card group 21, becomes lower than a predetermined threshold value, the power saving control unit 24 may also disconnect the power supplies of the call control cards (here, the active-based call control cards) selected by the selection unit 23.

In the first embodiment, the power saving control unit 24 may allow the call control cards (here, the active-based call control cards) selected by the selection unit 23 to be transitioned in a disconnection preparation state, in which assignment of a new call is limited, before the disconnection of power supplies.

The assignment unit 25 assigns a new call to one active-based call control card of the plurality of call control cards (here, the active-based call control cards). The assignment unit 25 assigns the new call to the active-based call control card such that the number of operational connection calls set in the active-based call control card is not exceeded. As described above, the assignment unit 25 controls the number of connection calls set by each of the plurality of call control cards such that the number of operational connection calls is not exceeded.

At the time of congestion, the assignment unit 25 may assign the new call with exceeding the number of operational connection calls. That is, at the time of congestion, the assignment unit 25 may also assign the new call without considering a margin.

The instruction unit 26 instructs the reduction of the transmission power of a signal transmitted from a cell corresponding to the call control cards (here, the active-based call control cards) transitioned in the disconnection preparation state. For example, when the network device 20 is the RNC 120, the instruction unit 26 instructs the NB 110, which has the cell corresponding to the active-based call control cards transitioned in the disconnection preparation state, to reduce the transmission power of a signal transmitted from the cell. Furthermore, when the network device 20 is the eNB 210, the instruction unit 26 instructs the reduction of the transmission power of a signal transmitted from the cell corresponding to the active-based call control cards transitioned in the disconnection preparation state, in the interior of the eNB 210.

The data shift unit 27 shifts user data, which is stored in the call control cards (here, the active-based call control cards) transitioned in the disconnection preparation state, to active-based call control cards not transitioned in the disconnection preparation state.

### (Operation and Effect)

In the first embodiment, in response to the disconnection of the power supplies of the call control cards (here, the active-based call control cards) selected by the selection unit 23, the power saving control unit 24 reduces the margin set in the active-based call control cards not selected by the selection unit 23 to thereby increase the number of operational connection calls set in the active-based call control cards not selected by the selection unit 23. Consequently, it is possible to disconnect power supplies of call control cards selected from the plurality of call control cards while absorbing a temporary increase in the number of calls.

As described above, the power supplies of the call control cards are disconnected, so that it is possible to achieve the low power consumption of the network device 20. Furthermore, the power supplies of the call control cards are sequentially disconnected, so that it is possible to shorten continuous operating times of the call control cards and to suppress a failure of the call control cards.

In the first embodiment, the selection unit 23 selects the active-based call control cards, for which power supplies are to be disconnected, based on at least one information (hereinafter, referred to as determination reference information) of "the total number of disconnections of a power supply", "the total disconnection time of a power supply", "the total number of processes of a connection call", and "the total number of accesses to a hardware resource". Consequently, it is possible to uniformize the degree of exhaustion of the call control cards and to further suppress a failure of the call control cards.

In the first embodiment, before the disconnection of the power supplies of the call control cards (here, the active-based call control cards) selected by the selection unit 23, the power saving control unit 24 allows the active-based call control cards selected by the selection unit 23 to be transitioned in the disconnection preparation state. Since a new call is not assigned to the active-based call control cards transitioned in the disconnection preparation state, the number of connection calls controlled by the active-based call control cards transitioned in the disconnection preparation state is only reduced. Consequently, when power supplied to the active-based call control cards transitioned in the disconnection preparation state is disconnected, it is possible to reduce a bad influence caused by the disconnection of the connection call.

In the first embodiment, the instruction unit 26 instructs the reduction of the transmission power of a signal transmitted from a cell corresponding to the call control cards (here, the active-based call control cards) transitioned in the disconnection preparation state. Consequently, it is possible to quickly reduce the number of connection calls controlled by the active-based call control cards transitioned in the disconnection preparation state.

In the first embodiment, the data shift unit 27 shifts user data, which is stored in the call control cards (here, the active-based call control cards) transitioned in the disconnection preparation state, to active-based call control cards not transitioned in the disconnection preparation state. Consequently, it is possible to quickly reduce the number of connection calls controlled by the active-based call control cards transitioned in the disconnection preparation state, without the disconnection of the connection call.

### [Other Embodiments]

The present invention is explained through the above embodiment, but it must not be understood that this invention is limited by the statements and the drawings constituting a part of this disclosure. From this disclosure, various alternative embodiments, examples, and operational technologies will become apparent to those skilled in the art.

The first communication system and the second communication system are not limited to communication systems corresponding to UMTS and LTE. That is, the first communication system and the second communication system may include another communication system (for example, a communication system corresponding to WiMAX).

In the embodiment, the communication card group 21 has a redundant configuration including active-based call control cards and standby-based call control cards. However, the embodiment is not limited thereto. Specifically, the communication card group 21 may not have the redundant configuration. That is, the standby-based call control cards may not exist.

In the embodiment, as call control cards for which power supplies are to be disconnected, one call control card is selected. However, the embodiment is not limited thereto. Specifically, as the call control cards for which power supplies are to be disconnected, two or more call control cards are selected.

Particularly not mentioned in the embodiment, an insertion/extraction history of the call control cards or an operational history of the call control cards may also be managed. For example, the selection unit 23 selects call control cards, for which power supplies are to be disconnected, based on the insertion/extraction history of the call control cards or the operational history of the call control cards such that the degree of exhaustion of the call control cards is uniformized. For example, call control cards, which are determined to be operated for a long time from the operational history, may be selected and the like as call control cards, for which power supplies are to be disconnected, because the degree of exhaustion is increased. Furthermore, call control cards, which are determined to be frequently inserted and extracted from the insertion/extraction history, may be selected and the like as call control cards, for which power supplies are to be disconnected, because connection portions are abraded (or the call control cards itself are deteriorated).

In addition, the operation of the above-mentioned network device 20 may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. Such an ASIC may be arranged in the network device 20. As a discrete component, such a storage medium and processor may be arranged in the network device 20.

In addition, the entire content of Japanese Patent Application No. 2011-051923 (filed on March 9, 2011) is incorporated in the present specification by reference.

### [Industrial Applicability]

According to the present invention, it is possible to provide a network device capable of achieving the lower power consumption of the network device. Furthermore, it is possible to provide a network device capable of shortening a continuous operating time of a call control card and suppressing a failure of the call control card by disconnecting the power supply of the call control card.

### [Reference Signs List]

10 ... Communication terminal device, 20 ... Network device, 21 ... Communication card group, 22 ... Communication unit, 23 ... Selection unit, 24 ... Power saving control unit, 25 ... Assignment unit, 26 ... Instruction unit, 27 ... Data shift unit, 50 ... Core network, 110 ... NB, 111 ... Cell, 120 ... RNC, 130 ... SGSN, 210 ... eNB, 211 ... Cell, 230 ... MME, 100 ... Mobile communication system

## Claims

1. A network device including a plurality of call control cards, comprising:
a selection unit that selects a call control card, for which a power supply is to be disconnected, from the plurality of call control cards;
a power saving control unit that disconnects the power supply of the call control card selected by the selection unit; and
an assignment unit that controls a number of connection calls set by each of the plurality of call control cards such that the number of connection calls does not exceed a number of operational connection calls obtained by subtracting a margin from a maximum number of connection calls settable by each of the plurality of call control cards, wherein
the power saving control unit reduces a margin set in a call control card not selected by the selection unit in response to disconnection of the power supply of the call control card selected by the selection unit, thereby increasing a number of operational connection calls set in the call control card not selected by the selection unit.

2. The network device according to claim 1, wherein in order to offset a number of operational connection calls set in the call control card selected by the selection unit, the power saving control unit reduces a margin set in the call control card not selected by the selection unit to thereby increase the number of operational connection calls set in the call control card not selected by the selection unit.

3. The network device according to claim 1, wherein the power saving control unit disconnects the power supply of the call control card selected by the selection unit, in a predetermined cycle.

4. The network device according to claim 1, wherein the power saving control unit disconnects the power supply of the call control card selected by the selection unit, when a number of connection calls, which is controlled by all the plurality of call control cards, becomes lower than a predetermined threshold value.

5. The network device according to claim 1, wherein the selection unit selects the call control card, for which the power supply is to be disconnected, based on at least one information of a total number of disconnections of a power supply, a total disconnection time of a power supply, a total number of processes of a connection call, and a total number of accesses to a hardware resource.

6. The network device according to claim 1, wherein, before disconnection of the power supply, the power saving control unit allows the call control card selected by the selection unit to be transitioned in a disconnection preparation state in which assignment of a new call is limited.

7. The network device according to claim 6, further comprising: a data shift unit that shifts user data, which is stored in the call control card transitioned in the disconnection preparation state, to a call control card not transitioned in the disconnection preparation state.
